# EUROPÄISCHE PATENTSCHRIFT

(11) **EP 2 803 618 B1**
(45) Veröffentlichungstag und Bekanntmachung des Hinweises auf die Patenterteilung: **25.10.2017**
(21) Anmeldenummer: 14168614.7
(22) Anmeldetag: 16.05.2014
(51) Int. Cl.: B66F 9/06, B60D 1/01, B60D 1/24

(54) **Flurförderzeug mit Anhängerkupplung**
Industrial truck with a trailer hitch
Chariot de manutention doté d'un attelage

(30) Priorität: 18.05.2013 DE 102013008705
(43) Veröffentlichungstag der Anmeldung: 19.11.2014
(73) Patentinhaber: Jungheinrich Aktiengesellschaft, 22047 Hamburg (DE)
(72) Erfinder: Badura, Klaus-Peter, 21357 Barum (DE); Ziemann, Jörg, 21149 Hamburg (DE)
(74) Vertreter: Hauck Patentanwaltspartnerschaft mbB

(56) Entgegenhaltungen:
- EP-A2- 2 492 162
- AU-A1- 2008 264 181

## Beschreibung

Die vorliegende Erfindung betrifft ein Flurförderzeug mit einem Antriebsteil, das eine Anhängerkupplung zum Ankuppeln eines Anhängers aufweist. Bevorzugt betrifft die vorliegende Erfindung ein Schleppfahrzeug, wie es bei der Bildung eines Routenzuges oder eines Schleppzuges zum Einsatz kommt.

Bisher bekannte Schleppzüge werden aus einem oder mehreren Schleppern und mit diesen verbundenen Anhängern gebildet. Hierbei hat sich herausgestellt, dass, je höher die Anhängerlast und je mehr Anhänger in dem Zug geschleppt werden, umso schwieriger die Handhabung des Zuges durch das Schleppfahrzeug ist, insbesondere das Abbremsen. Auch lässt die Kurvenstabilität des Schleppzuges mit zunehmender Menge und Last in dem Schleppzug nach. Bei bekannten Schleppfahrzeugen ist es daher üblich, wenn diese für den Einsatz mit vielen oder schwer beladenen Anhängern vorgesehen sind, die maximal zulässige Endgeschwindigkeit des Schleppers zu drosseln.

Aus AU 2008 264 181 A1, die den Oberbegriff des Anspruchs 1 zeigt, ist eine lösbar zu befestigende Anhängerkupplung bekannt. Die Anhängerkupplung ist mit Dehnungsmessstreifen ausgestattet, um eine Zugkraft zu messen.

Aus EP 2 492 162 A2 ist ein Schlepper mit einer Ladefläche und/oder einer Anhängervorrichtung bekannt. Der Schlepper besitzt eine Steuerungseinrichtung zur Begrenzung der Fahrgeschwindigkeit des Schleppers, eine Lastermittlungseinrichtung und/oder eine Bodenprofilermittlungseinrichtung, wobei die Lastermittlungseinrichtung eingerichtet ist, das Gewicht einer Last zu ermitteln und diese Information an die Steuerungseinrichtung weiterzugeben.

Der Erfindung liegt die Aufgabe zugrunde, ein Flurförderzeug, insbesondere einen Schlepper, bereitzustellen, bei dem eine Drosselung der Endgeschwindigkeit vermieden, aber gleichwohl eine hohe maximal zulässige Endgeschwindigkeit erreicht werden kann.

Erfindungsgemäß wird die Aufgabe durch ein Flurförderzeug mit den Merkmalen aus Anspruch 1 gelöst. Vorteilhafte Ausgestaltungen sind in den Unteransprüchen beschrieben.

Das erfindungsgemäße Flurförderzeug besitzt ein Antriebsteil, das eine Anhängerkupplung zum Ankoppeln eines Anhängers aufweist. Die Anhängerkupplung ist starr auf einem Adapter montiert. Erfindungsgemäß ist der Adapter an dem Antriebsteil derart montiert, dass eine an der Anhängerkupplung angreifende, von dem Antriebsteil fortweisende Zugkraft über eine Kraftmesseinrichtung erfasst und in das Antriebsteil eingeleitet wird. Die starr auf dem Adapter vorgesehene Anhängerkupplung nimmt die angreifenden Zugkräfte, also die von dem Antriebsteil fortweisenden horizontalen Kräfte auf und leitet diese über die Kraftmesseinrichtung in das Antriebsteil ein. Hierdurch liegt in dem Antriebsteil des Flurförderzeugs die gemessene Zugkraft für das Schleppfahrzeug vor und kann somit bei der Steuerung des Flurförderzeugs berücksichtigt werden. Neben der von dem Antriebsteil fortweisenden Zugkraft kann die Kraftmesseinrichtung bevorzugt auch die zu dem Antriebsteil gerichtete Druckkraft messen.

Erfindungsgemäß ist der Adapter als eine Platte ausgebildet, auf deren ersten Flachseite die Anhängerkupplung befestigt ist und auf deren gegenüberliegenden Flachseite ein Drehlager und ein Verbindungselement angeordnet sind. Über das Drehlager ist die Platte schwenkbar an dem Antriebsteil gelagert. Eine an dem Adapter angreifende Zugkraft kann somit über das Verbindungselement von der Adapterplatte in das Antriebsteil des Fahrzeugs eingeleitet werden, wobei die Zugkraft über die Kraftmesseinrichtung in das Antriebsteil eingeleitet und gemessen wird. Indem das Drehlager nicht gegenüberliegend zu der Anhängerkupplung an dem Adapter angeordnet ist, sondern versetzt hierzu, wird durch das Drehlager ein Drehmoment auf die Platte und somit auf das Verbindungselement ausgeübt. Bei der Verwendung des Drehlagers ist für die Kraftmessung zu berücksichtigen, dass die an dem Adapter angreifende Zugkraft und die von der Kraftmesseinrichtung erfasste Kraft aufgrund des übertragenen Drehmoments in einem Verhältnis zueinander stehen, das umgekehrt zu dem Verhältnis der Abstände der Kräfte zu dem Drehpunkt ist. Über die Wahl der Abstände besteht zudem der Vorteil, die angreifenden Zugkräfte durch geeignete Wahl der Abstände in den Messbereich der Kraftmesseinrichtung zu übersetzen.

Erfindungsgemäß ist eine Fahrzeugsteuerung vorgesehen, die ansprechend auf gemessene Werte der Kraftmesseinrichtung die Steuerung des Fahrzeugs beeinflusst. In der Fahrzeugsteuerung sind ein oder mehrere der folgenden Fahrparameter gespeichert: maximale Fahrgeschwindigkeit, maximale Fahrbeschleunigung und minimaler Kurvenradius. Diese Fahrparameter beeinflussen das Fahrverhalten des Fahrzeugs und werden abhängig von dem gemessenen Wert für die Zugkraft angepasst. Stellt das schleppende Fahrzeug fest, dass eine große Zugkraft aufgebracht werden muss, so können die für die Fahrsicherheit relevanten Fahrparameter, wie beispielsweise die maximale Fahrgeschwidigkeit, die maximale Fahrbeschleunigung und der minimale Kurvenradius, angepasst werden.

In einer bevorzugten Ausgestaltung ist das Verbindungselement als eine Lasche ausgebildet, die mit dem Antriebsteil verbindbar ist. Bevorzugt ist eine Kraftmesseinrichtung auf oder an dem Verbindungselement angeordnet. Die Kraftmesseinrichtung erfasst den Teil der Kraft, der über das Verbindungselement in das Antriebsteil des Fahrzeugs eingeleitet wird. Aus den geometrischen Verhältnissen an der Anhängerkupplung und der Platte kann aus der gemessenen Kraft auch auf die Zugkraft zurückgerechnet werden.

In einer bevorzugten Ausgestaltung weist die Kraftmesseinrichtung eine Anzeige auf, die eine an der Anhängerkupplung gemessene Zugkraft anzeigt. Die Anzeige für die Zugkraft ist bevorzugt im Sichtfeld des Fahrzeugführers vorgesehen, so dass der Fahrzeugführer die auf sein schleppendes Fahrzeug ausgeübte Zugkraft gut sichtbar erfassen kann. Bevorzugt reduziert die Fahrzeugsteuerung mindestens einen Fahrparameter, wenn der gemessene Wert für die Zugkraft einen vorbestimmten Maximalwert überschreitet. In dieser Ausgestaltung lässt die Fahrzeugsteuerung es zu, dass das erfindungsgemäße Flurförderzeug, beispielsweise bei geringer Zugkraft, mit einer höheren Endgeschwindigkeit fährt als bei einer höheren an dem Flurförderzeug angreifenden Zugkraft. Voll beladene Anhänger werden somit langsamer als leere Anhänger geschleppt. Ebenso werden bei einer Fahrt entgegen einer Steigung die maximale Geschwindigkeit, die maximale Beschleunigung und/oder der minimale Kurvenradius reduziert.

In einer weiteren bevorzugten Ausgestaltung sind in der Fahrzeugsteuerung mehrere Fahrprogramme abgelegt, in denen jeweils ein oder mehrere Fahrparameter in einem Fahrprogramm zusammengefasst sind, wobei die Fahrzeugsteuerung entsprechend einem gemessenen Wert für die Zugkraft eines der Fahrprogramme auswählt. In der erfindungsgemäßen Ausgestaltung werden also nicht vorgegebene Parameter in ihrem Wert verändert, sondern entsprechend der erfassten Zugkraft wird ein Fahrprogramm mit einem geeigneten Satz von Fahrparametern ausgewählt.

In einer bevorzugten Ausgestaltung misst die Kraftmesseinrichtung bei stehendem und bei schleppendem Fahrzeug, wobei aus einer Veränderung der Messwerte die Zugkraft bestimmt wird.

Die Erfindung wird anhand der nachfolgenden Ausführungsbeispiele näher erläutert. Es zeigen:
- Fig. 1: einen Schlepper in einer perspektivischen Ansicht,
- Fig. 2: einen Adapter mit Anhängerkupplung in einer schematischen Ansicht von der Seite,
- Fig. 3: den Verlauf der Zugkraft über der Zeit,
- Fig. 4: ein Flussdiagramm zu dem in der Fahrzeugsteuerung ausgeführten Verfahren,
- Fig. 5: ein Blockdiagramm zur Auswertung der Messwerte,
- Fig. 6: ein alternatives Blockdiagramm mit einer Einstellung eines Fahrparameters und
- Fig. 7: ein alternatives Blockdiagramm zur Einstellung von mehreren Fahrparametern.

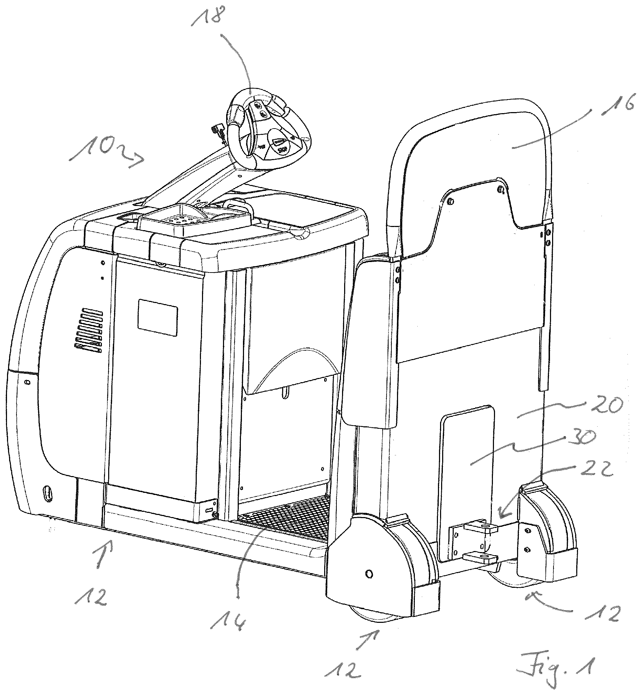

Fig. 1 zeigt in einer perspektivischen Ansicht ein Schleppfahrzeug 10, das ein dreirädriges Fahrwerk 12 besitzt. Das Fahrzeug besitzt eine Standplattform 14 mit einer Rückenlehne 16. Auf der Standplattform 10 stehend kann eine Bedienperson über ein Bedienelement 18 das Schleppfahrzeug steuern. Hierbei können beispielsweise die Fahrtrichtung und die Fahrgeschwindigkeit vorgegeben werden.

Auf der nach hinten weisenden Rückwand 20 des Schleppfahrzeugs ist eine Anhängerkupplung 22 für ein zu schleppendes Fahrzeug vorgesehen.

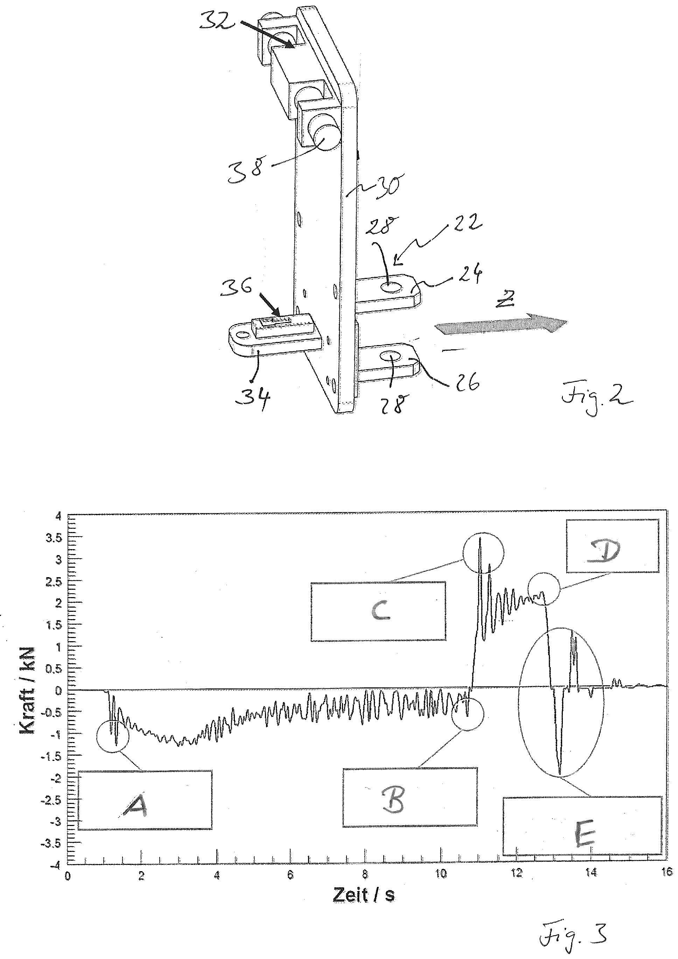

Fig. 2 zeigt in einer schematischen Ansicht eine mögliche Anhängerkupplung 22, bei der zwei vorstehende Anhängerplatten 24, 26 einander gegenüberliegend angeordnet sind und eine miteinander fluchtende Durchgangsbohrung 28 besitzen.

Zur Befestigung des Anhängers wird die Anhängerdeichsel mit einer endseitigen Öse (nicht dargestellt) zwischen den Anhängerplatten 24 und 26 angeordnet und über einen durch die Öffnung 28 geführten Verriegelungsbolzen befestigt. Die Anhängerkupplung 22 ist auf einer Adapterplatte 30 montiert. Die gegenüberliegende Seite der Adapterplatte 30 trägt ein Drehlager 32 und eine Verbindungslasche 34. Auf der Verbindungslasche 34 ist ein Dehnungsmessstreifen 36 als Kraftmesseinrichtung angeordnet. Zur Befestigung der Adapterplatte 30 an dem schleppenden Fahrzeug wird das Drehlager 32 über den Zapfen 38 in einer entsprechenden Öffnung an dem Antriebsteil schwenkbar befestigt. Dabei ist die Adapterplatte 30 im Wesentlichen schwer lenkbar an dem Antriebsteil angebracht. Die an der Anhängerkupplung 22 angreifende Zugkraft Z bewirkt am Drehlager eine Schwenkbewegung der Adapterplatte. Über die Verbindungslasche 34 ist die Adapterplatte dann mit dem schleppenden Fahrzeug verbunden, so dass die durch die Zugkraft Z entstehende Drehbewegung über die Verbindungslasche 34 in das Fahrzeug eingeleitet wird. Hierbei wird die Kraft durch den Dehnungsmessstreifen 36 als Kraftmesseinrichtung geleitet, wobei der Dehnungsmessstreifen 36 sowohl die zu dem Antriebsteil hin gerichteten Druckkräfte als auch die von dem Antriebsteil fortweisenden Zugkräfte erfasst.

Ein besonderer Vorteil des dargestellten Adapters 30 besteht darin, dass dieser grundsätzlich an Fahrzeugen nachgerüstet werden kann. Hierzu ist lediglich ein geeignetes Gegenlager für das Drehlager 32 erforderlich und eine Anbindung für die Verbindungslasche 34.

Fig. 3 zeigt bei einem Zug mit zwei Anhängern einen typischen Verlauf der auftretenden Kraft. Der Messvorgang startet durch ein Signal von der Standplattform 14 oder von einem Sitzschalter, sobald der Fahrer das Fahrzeug betritt oder auf dem Sitz Platz nimmt. Durch dieses Signal wird eine kurze Auswertung des Dehnungsmessstreifens 36 gestartet. Der Wert dient als Referenzwert/Nullwert für die späteren Messungen. Durch eine Betätigung des Fahrschalters wird die zur Bestimmung der Last notwendige Messung gestartet. Der Dehnungsmessstreifen 36 besitzt einen abhängig von der angreifenden Kraft veränderlichen elektrischen Widerstand, der durch eine geeignete elektrische Schaltung (Brückenschaltung) erfasst werden kann. Unter Berücksichtigung von Materialkennwerten, den geometrischen Messungen von Lasche und Adapter, kann die an dem Dehnungsmessstreifen 36 erfasste Dehnung in eine entsprechende Kraft umgerechnet werden.

Fig. 3 zeigt den Kraftverlauf über der Zeit, wobei zum Zeitpunkt A das Anrucken der beiden Anhänger erfolgt, bei dem die zunächst stehenden Anhänger sich in Bewegung setzen. In dem dargestellten Beispiel erfolgt zum Zeitpunkt B ein Notaus zum abrupten Abbremsen des Fahrzeugs. Das Notaus führt in C zum Auffahren der Anhänger auf das schleppende Fahrzeug. Hierdurch wird eine das Fahrzeug schiebende Kraft übertragen und das Fahrzeug kommt im Zeitpunkt D zum Stillstand, so dass die angreifende Kraft abrupt nachlässt. Der Stillstand des Fahrzeugs führt dann zu einer Pendelbewegung der beiden Anhänger, die den Vorzeichenwechsel der angreifenden Kraft im Zeitbereich E verursacht.

Das vorstehende Beispiel macht deutlich, dass für eine zuverlässige Signalverarbeitung, die gemessenen Werte geglättet werden müssen.

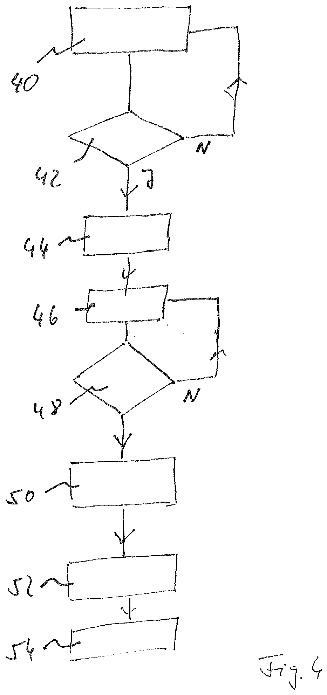

Fig. 4 zeigt ein Flussdiagramm, bei dem in Verfahrensschritt 40 eine Systemaktivierung erfolgt. Diese erfolgt durch eine Abfrage der Standplattform, ob diese betreten wurde oder durch einen Sitzschalter, ob jemand auf dem Sitz Platz genommen hat. Die Initialisierung löst eine Aktivierung der Kraftmesseinrichtung für einen Messvorgang aus. Ebenfalls erfolgt eine Bremsmessung.

In Verfahrensschritt 42 wird der Fahrschalter abgefragt, ob eine Betätigung des Fahrschalters oder des Fahrpedals erfolgt ist. Liegt die Betätigung nicht vor, so kehrt das System zur Systemaktivierung und Referenzwertmessung in Schritt 40 zurück. Ist der Fahrschalter betätigt worden, so erfolgt in Schritt 44 eine Glättung der gemessenen Werte und eine Aufbereitung, beispielsweise durch Mittelwertbildung, für einen Vergleich. In Verfahrensschritt 46 werden die geglätteten und aufbereiteten Messwerte mit dem Referenzmesswert aus dem Verfahrensschritt 40 verglichen. In Abfrage 48 wird festgestellt, ob die gemessenen Werte einen vorgegebenen Grenzwert überschritten haben. Ist dies nicht der Fall, so wird der Messvorgang fortgesetzt. Ist dies der Fall, so wird in Verfahrensschritt 50 ein Fahrparameter, beispielsweise der Fahrparameter für die maximale Fahrgeschwindigkeit herabgesetzt.

In Verfahrensschritt 52 wird der herabgesetzte Fahrparameter in der Fahrsteuerung für eine weitere Ansteuerung des Fahrzeugs gespeichert. In Verfahrensschritt 54 kehrt das Fahrzeug in einen Bereitschaftsmodus zurück, von dem aus beispielsweise die Anpassung der Fahrparameter wiederholt oder überwacht werden kann.

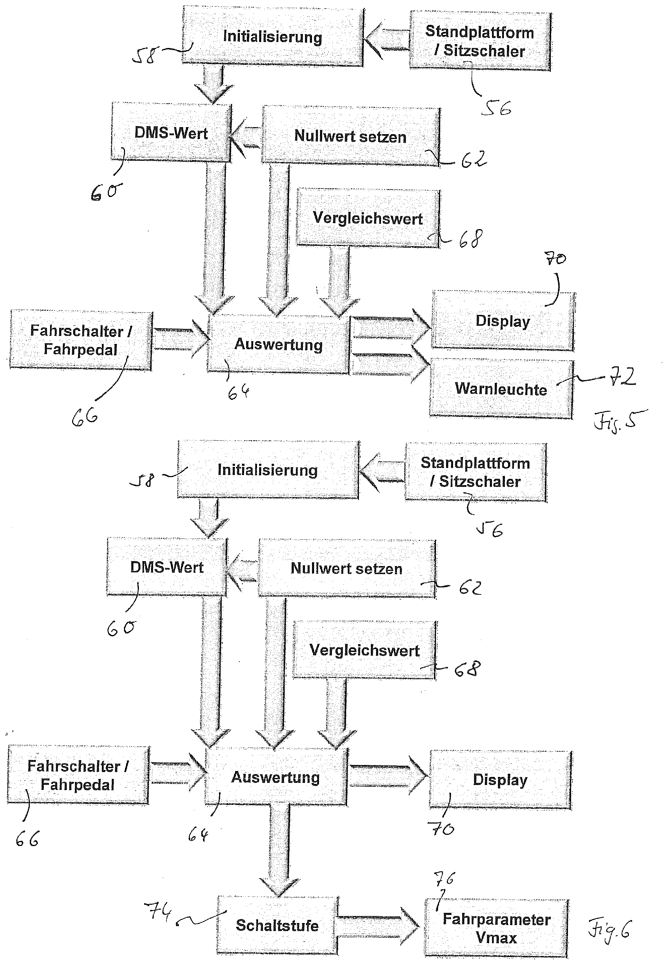

Fig. 5 zeigt in einem Blockdiagramm die wesentlichen Verfahrensschritte. In Verfahrensschritt 56 erfolgt eine Aktivierung, die je nach Ausgestaltung des Flurförderzeugs durch ein Betreten der Standplattform oder ein Platznehmen auf einem Sitz erfolgen kann (Auslösen des Sitzschalters).

In einem nachfolgenden Schritt 58 erfolgt die Initialisierung des Verfahrens. Nachfolgend zur Initialisierung des Verfahrens wird ein Wert des Dehnungsmessstreifens in Verfahrensschnitt 60 aufgenommen. Der Wert des Dehnungsmessstreifens ist der von dem Dehnungsmessstreifen ausgegebene Wert, der einer Zugkraft entspricht. Zu Beginn des Verfahrens wird der Wert des Dehnungsmessstreifens in Verfahrensschritt 62 zurückgesetzt, indem ein vorliegender Wert als Nullwert ausgewählt wird. In Verfahrensschritt 64 erfolgt die Auswertung der gewonnenen Messwerte 60. Die Auswertung wird durch ein Betätigen des Fahrschalters oder des Fahrpedals in Schritt 66 ausgelöst. Die Auswertung 64 kann ebenfalls gespeicherte Vergleichswerte 68 heranziehen. Als Ergebnis der Auswertung kann die an dem Fahrzeug anliegende Zugkraft in Schritt 70 angezeigt werden. Bei Überschreiten eines maximal zulässigen Wertes für die Zugkraft kann in Verfahrensschritt 72 eine Warnleuchte ausgelöst werden.

Bei der in Fig. 5 dargestellten Variante erfolgt kein Eingriff in die Fahrparameter.

Fig. 6 zeigt den Ablauf eines Verfahrens, bei dem statt der Betätigung einer Warnleuchte in Schritt 72, ein Eingriff in die Fahrparameter erfolgt. Hierzu liegen die Ergebnisse der Auswertung 64 an einer Schaltstufe 74 an, die bei Überschreiten eines vorbestimmten Maximalwerts für die Zugkraft den Fahrparameter für die maximal zulässige Fahrgeschwindigkeit Vₘₐₓ in Verfahrensschritt 76 herabsetzt. Bei dieser Ausgestaltung fährt das schleppende Fahrzeug mit einer geringeren Maximalgeschwindigkeit, wenn eine zu große Zugkraft über die Anhängerkupplung auf das Fahrzeug wirkt.

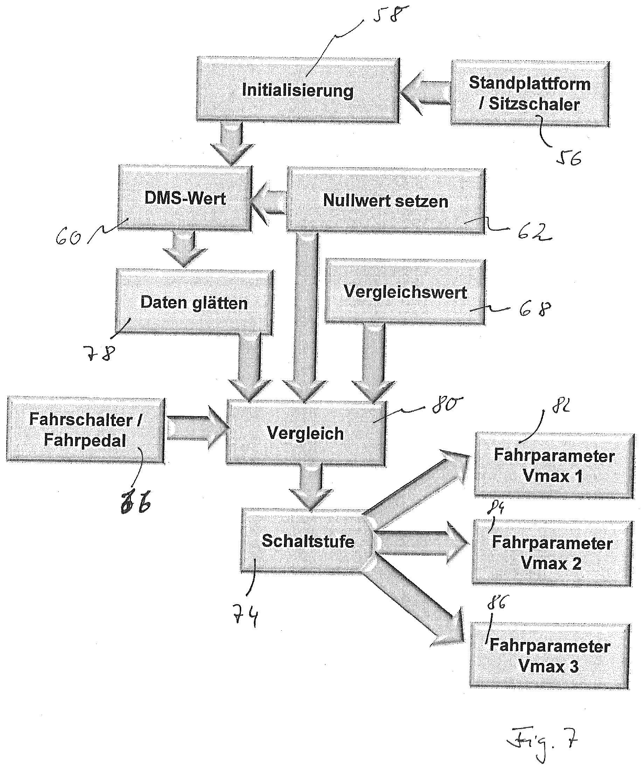

Fig. 7 zeigt eine weitere Ausgestaltung, bei der in den Schritten 82, 84 und 86 jeweils eine unterschiedliche maximale Fahrgeschwindigkeit Vₘₐₓ₁, Vₘₐₓ₂ oder Vₘₐₓ₃ ausgewählt werden kann. Die unterschiedlichen Schaltstufen 74 werden durch den Vergleichsschritt 80 angesteuert, wobei an dem Vergleichsschritt 80 mehrere unterschiedliche Vergleichswerte 68 anliegen. Zur besseren Einordnung der gemessenen Zugkraft werden vor dem Vergleich 80 die Daten in Schritt 78 geglättet.

## Patentansprüche

1. Flurförderzeug (10) mit einem Antriebsteil, das eine Anhängerkupplung (22) zum Ankuppeln eines Anhängers aufweist, wobei die Anhängerkupplung (22) starr auf einem Adapter (30) und der Adapter (30) an dem Antriebsteil derart montiert ist, dass eine an der Anhängerkupplung (22) angreifende, von dem Antriebsteil fortweisende Zugkraft über eine Kraftmesseinrichtung (36) in das Antriebsteil eingeleitet wird, wobei der Adapter (30) als eine Platte ausgebildet ist, auf deren erste Flachseite die Anhängerkupplung (22) befestigt ist und auf deren gegenüberliegenden Flachseite ein Drehlager (32), über welches die Platte schwenkbar an dem Antriebsteil gelagert ist, und ein Verbindungselement (38), über welches eine an dem Adapter angreifende Zugkraft vom Adapter (30) in das Antriebsteil des Fahrzeugs eingeleitet wird, angeordnet sind, **dadurch gekennzeichnet, dass** das Flurförderfahrzeug mit einer Fahrzeugsteuerung ausgestattet ist, in der mindestens einer der nachfolgenden Fahrparameter gespeichert ist: maximale Fahrgeschwindigkeit, maximale Fahrbeschleunigung und minimaler Kurvenradius, und
wobei die Fahrzeugsteuerung, abhängig von dem gemessenen Wert für die Zugkraft mindestens einen der Fahrparameter anpasst.

2. Flurförderzeug nach Anspruch 1, **dadurch gekennzeichnet, dass** das Verbindungselement als längliche Lasche ausgebildet ist, die mit dem Antriebsteil verbindbar ist.

3. Flurförderzeug nach Anspruch 1 oder 2, **dadurch gekennzeichnet, dass** die Kraftmesseinrichtung auf oder an dem Verbindungselement angeordnet ist.

4. Flurförderzeug nach einem der Ansprüche 1 bis 3, **dadurch gekennzeichnet, dass** die Kraftmesseinrichtung eine Anzeige aufweist, die eine an der Anhängerkupplung gemessene Zugkraft anzeigt.

5. Flurförderzeug nach Anspruch 1, **dadurch gekennzeichnet, dass** die Fahrzeugsteuerung mindestens einen Fahrparameter reduziert, wenn der gemessene Wert für die Zugkraft eine vorbestimmten Maximalwert überschreitet.

6. Flurförderzeug nach einem der Ansprüche 1 bis 5, **dadurch gekennzeichnet, dass** in der Fahrzeugsteuerung mehrere Fahrprogramme abgelegt sind, in denen ein oder mehrere Fahrparameter zu einem Fahrprogramm zusammengefasst sind, wobei die Fahrzeugsteuerung entsprechend einem gemessenen Wert für die Zugkraft eines der Fahrprogramme auswählt.

7. Flurförderzeug nach einem der Ansprüche 1 bis 6, **dadurch gekennzeichnet, dass** die Kraftmesseinrichtung bei stehendem Fahrzeug und bei schleppendem Fahrzeug misst und aus der Veränderung der Messwerte die Zugkraft bestimmt.

## Claims

1. Industrial truck (10)
with a drive component, having a trailer hitch (22) for hitching a trailer,
wherein the trailer hitch (22) is rigidly mounted on an adapter (30), and said adapter (30) is mounted on the drive component such that a tensile force that acts upon the trailer hitch (22) and emanates from the drive part is introduced by a force measuring apparatus (36) into the drive component,
wherein the adapter (30) is configured as a plate that has the trailer hitch (22) attached on its first flat side and that has a pivot bearing (32), by means of which the plate is rotatably mounted on the drive component, and a connecting element (38), by means of which a tensile force from the adapter (30) is introduced into the drive component of the vehicle, arranged on its opposite flat side,
**characterized in that** the industrial truck is equipped with a vehicle control system, in which at least one of the following driving parameters is stored: maximum driving speed, maximum acceleration and minimum turning radius,
and wherein the vehicle control system adapts at least one of the driving parameters in accordance with the measured value of the tensile force.

2. The industrial truck according to claim 1, **characterized in that** the connecting element is configured as an elongate lug, which can be connected with the drive component.

3. The industrial truck according to claim 1 or 2, **characterized in that** the force measuring apparatus is arranged on or against the connecting element.

4. The industrial truck according to one of claims 1 through 3, **characterized in that** the force measuring apparatus has a display that shows a tensile force measured on the trailer hitch.

5. The industrial truck according to claim 1, **characterized in that** the vehicle control system reduces at least one driving parameter when the measured value of the tensile force exceeds a predetermined maximum value.

6. The industrial truck according to one of claims 1 through 5, **characterized in that** multiple driving programs, in which one or more driving parameters are combined into a driving program, are stored in the vehicle control system, wherein the driving control system selects one of the driving programs in accordance with a measured value of the tensile force.

7. The industrial truck according to one of claims 1 through 6, **characterized in that** the force measuring apparatus takes measurements when the vehicle is stationary and when the vehicle is pulling a trailer, and it determines the tensile force on the basis of the change in the measured values.

## Revendications

1. Chariot de manutention (10)
doté d'une pièce d'entraînement présentant un attelage de remorque (22) pour l'attelage d'une remorque, l'attelage de remorque (22) étant monté fixement sur un adaptateur (30) et l'adaptateur (30) étant monté sur la pièce d'entraînement, de telle façon qu'une force de traction dirigée à l'opposé de la pièce d'entraînement et agissant sur l'attelage de remorque (22) est appliquée par le biais d'un dispositif de mesure de force (36) à la pièce d'entraînement, l'adaptateur (30) étant conçu comme une plaque, sur la première face plate de laquelle est fixé l'attelage de remorque (22) et sur la face plate opposée de laquelle sont disposés un palier rotatif (32) par lequel la plaque est montée de façon pivotante sur la pièce d'entraînement et un élément de liaison (38) par lequel une force de traction agissant sur l'adaptateur est transmise de l'adaptateur (30) à la pièce d'entraînement du véhicule, **caractérisé en ce que**
le chariot de manutention est doté d'une commande de véhicule, dans laquelle est enregistré au moins l'un des paramètres de conduite suivants : vitesse de conduite maximale, accélération maximale et rayon de virage minimal, et
dans lequel la commande de véhicule adapte au moins l'un des paramètres de conduite en fonction de la valeur mesurée pour la force de traction.

2. Chariot de manutention selon la revendication 1, **caractérisé en ce que** l'élément de liaison est conçu comme une patte allongée apte à être reliée à la pièce d'entraînement.

3. Chariot de manutention selon la revendication 1 ou 2, **caractérisé en ce que** le dispositif de mesure de force est disposé sur ou contre l'élément de liaison.

4. Chariot de manutention selon l'une des revendications 1 à 3, **caractérisé en ce que** le dispositif de mesure de force présente un indicateur indiquant une force de traction mesurée sur l'attelage de remorque.

5. Chariot de manutention selon la revendication 1, **caractérisé en ce que** la commande de véhicule réduit au moins un paramètre de conduite lorsque la valeur mesurée pour la force de traction dépasse une valeur maximale prédéfinie.

6. Chariot de manutention selon l'une des revendications 1 à 5, **caractérisé en ce que** plusieurs programmes sont enregistrés dans la commande de véhicule dans lesquels un ou plusieurs paramètres de conduite sont regroupés en un programme de conduite, la commande de véhicule sélectionnant l'un des programmes de conduite en fonction d'une valeur mesurée pour la force de traction.

7. Chariot de manutention selon l'une des revendications 1 à 6, **caractérisé en ce que** le dispositif de mesure de force prend des mesures lorsque le véhicule est à l'arrêt et lorsque le véhicule effectue un remorquage, et détermine la force de traction à partir de la variation des valeurs de mesure.
